# EUROPEAN PATENT SPECIFICATION

(11) **EP 3 312 813 B1**
(45) Date of publication and mention of the grant of the patent: **29.01.2020**
(21) Application number: 17197567.5
(22) Date of filing: 20.10.2017
(51) Int. Cl.: G08B 13/19, G08B 29/14, G01J 5/52

(54) **A METHOD, A TEST DEVICE AND A MONITORING SYSTEM FOR TESTING A PASSIVE INFRARED MOTION DETECTION SENSOR**
VERFAHREN, TESTVORRICHTUNG UND ÜBERWACHUNGSSYSTEM ZUM TESTEN EINES PASSIVEN INFRAROTBEWEGUNGSSENSORS
PROCÉDÉ, DISPOSITIF DE TEST ET SYSTÈME DE SURVEILLANCE DE TEST D'UN CAPTEUR DE DÉTECTION DE MOUVEMENT À INFRAROUGE PASSIF

(30) Priority: 20.10.2016 NL 2017644
(43) Date of publication of application: 25.04.2018
(73) Proprietor: Unica Groep B.V., 8024 HA Zwolle (NL)
(72) Inventor: JENNISKENS, Henricus Antonius Johannes Maria, 4842 ND BREDA (NL); JENNISKENS, Johannes Antonius Catharina Maria, 4822 SP BREDA (NL)
(74) Representative: Algemeen Octrooi- en Merkenbureau B.V.

(56) References cited:
- EP-A1- 2 199 999
- WO-A2-03/067203
- DE-A1-102006 019 941
- US-A- 5 045 702
- US-A- 5 438 233
- US-A1- 2005 151 647

## Description

### Technical Field

The present disclosure generally relates to passive infrared, PIR, motion detection. More specifically, the present disclosure relates to a method of, a test device and a monitoring system for testing the operation of a PIR sensor. The disclosure further provides a tracing device for tracing detection zones of a PIR sensor.

### Background

PIR sensors allow to sense motion by an infrared energy radiating body, such as human body, that moves in or across a detection field of view or detection range of the sensor. PIR motion detection sensors, or also often referred to as pyroelectric or IR motion sensors, are relatively small, low-power and easy to install devices, commonly used in homes, offices and other locations for monitoring and/or alarm applications, for automated operation of lighting equipment, for example, and other control purposes.

The term PIR sensor is used in practice to indicate a complete detection device comprised of the actual detector or sensing part and a beamforming part that determines the detection field of view of the PIR sensor. The majority of present PIR sensors operates with a field of view comprised of adjacently arranged detection zones, either in a sliced type spatial arrangement, wherein the field of view is composed of imaginary adjacently arranged detection slices, or in a three-dimensional arrangement, wherein a detection zone spans a particular solid angle. The number and type of detection zones depends on the type of lens that is used for focussing the infrared energy at the actual detector or sensing part, such as a multiple facetted Fresnel type lens.

PIR sensors nowadays respond based on differential input signals. The detector, i.e. the sensing part of the PIR sensor, has a sensing area comprised of at least two windows. When the detector is idle, i.e. when there is no infrared energy source moving in the field of view, all windows detect the same amount of infrared radiation generated in the ambient of the detector, i.e. by the walls and furniture in a room, or outdoors by the sun, for example. When a warm body, like a human or larger animal, at a temperature above the ambient temperature, passes the sensing area of the detector, the radiation energy emitted by the body is captured in a first window and the infrared radiation at the detector increases, which causes a positive differential energy change between this window and a second or any of the other windows, producing a positive going pulse signal. When the body eventually leaves the sensing area the reverse happens, i.e. the infrared energy in the last window decreases, whereby the detector produces a negative differential change pulse signal. The changed pulses may trigger a response by the PIR sensor, i.e. by the control electronic thereof processing the pulses.

Most PIR sensors comprise two sensing windows. However sensors comprising detectors having four or even more sensing windows are known in practice. It will be appreciated that in the case of more than two sensing windows, a moving body will cause differential pulses between windows of the detector, such that the number of and the order in which the pulses are produced may also be used for determining whether to respond.

In case of a detector comprising two sensing windows, the detection zones of the PIR sensor are subdivided in a first and a second adjacent detection subzone, either sliced or comprised by solid angle subzones. Likewise, in case of more than two sensing windows, the beamforming part of the PIR sensor divides a detection zone of the PIR sensor in as many as detection subzones as sensing windows, such as consecutive first and second detection subzones, for example.

German patent application DE 199 02 213 discloses a PIR sensor testing arrangement, comprised of a thermal infrared radiation source that is moveable within the field of view of the PIR sensor. In practice, however, in particular for testing a PIR sensor in a room equipped with furniture and the like, such a moving body is impracticable to handle and difficult to control.

International patent application WO03/067203 discloses a device for calibration and control of thermal detectors, such as PIR sensors. The device produces an intensity modulated collimated beam for directing onto a PIR sensor. In particular, it is disclosed to direct the collimated beam at the PIR sensor from a plurality of different positions, and to observe whether the PIR sensor responds. Moving the device to different positions for reliably testing the proper operation of a PIR sensor is cumbersome, relatively expensive, and is not suitable for automated testing procedures.

German patent application DE 10 2006 019941 discloses a monitoring device for detecting subjects emitting infrared radiation. The monitoring device comprises a passive infrared detection sensor having a plurality of infrared radiation detectors and an optical component placed in front of the radiation detectors for directing, at the radiation detectors, infrared radiation emitted by a subject external from and in the vicinity of the monitoring device. The monitoring device comprises build-in heat generating sources, closely spaced with the radiation detectors, for testing whether the radiation detectors are internally in the monitoring device blocked from receiving external infrared radiation through the optical component.

### Summary

It is an object to provide a method and test device for reliably testing PIR sensors, in particular for repeatable, automated testing of PIR sensors in a monitoring system.

In a first aspect there is disclosed a method of testing a passive infrared motion detection sensor using a test device arranged for generating infrared radiation for exciting the sensor, which sensor having an infrared radiation detector and a detection window formed by a beamforming part defining a detection range or a detection field of view, wherein the beamforming part is arranged for directing infrared radiation in the field of view at the infrared radiation detector, the field of view being comprised of a plurality of spatially adjacent detection zones and each detection zone being comprised of first and second adjacent detection subzones. The method comprises the steps of:
- determining a single detection subzone of a detection zone at a position remote from the sensor in the field of view thereof,
- arranging the test device at the position for generating infrared radiation in the determined single detection subzone, and
- generating infrared radiation in the determined single detection subzone by the test device in accordance with a radiation profile providing an amount of infrared energy creating a differential signal between the determined single detection subzone and its adjacent detection subzone for triggering a response by the sensor.

For provoking a reliable response by the PIR sensor under test, the method involves positioning of the test device in the field of view of the PIR sensor such to substantially radiate infrared radiation in a single detection subzone of the PIR sensor, thereby creating a differential signal between the subzones, for triggering a response by the PIR sensor. That is, after the test device is positioned as indicated and the PIR sensor is in its idle or quiescent state or mode, when generating infrared radiation by the test device in a single subzone, a differential energy change is caused between the first and second detection subzones, and hence the first and second sensing window of the detector in the PIR sensor, thereby producing a differential pulse signal as disclosed above.

A radiation profile may comprise, for example, a pulse type infrared radiation profile, simulating a moving or walking human body, having a predetermined rising or leading edge, a falling or trailing edge and a pulse width during which an amount of infrared energy is radiated by the test device at a level that can be sensed by the PIR sensor taking into account the geographical distance between the test device and the PIR sensor.

The test device, after the correct positioning thereof for testing purposes, may be fixedly and/or permanently installed at this position, such as mounted on a wall in the field of view of the PIR sensor under test. Then, each time by controlling the test device for emitting infrared radiation, the correct operation of the PIR sensor can be tested in an automated manner.

In the case that each detection zone of the sensor is comprised of a plurality of first and second adjacent detection subzones, such as four detection subzones, for example, the step of determining comprises determining, at the position mentioned, a first group of first detection subzones of a detection zone or a second group of second detection subzones of a detection zone, and the step of arranging comprises arranging the test device at the determined position for simultaneously or independently predominantly generating infrared radiation in each first detection subzone of the determined first group or in each second detection subzone of the determined second group.

That is infrared radiation can be provided in a subzone of a group, independently from the other subzones of the group, or simultaneously in all the subzones of the group, thereby creating plural differential pulses for provoking a response by the PIR sensor. To this end, the first detection subzones may be charged with infrared radiation in accordance with a particular radiation profile corresponding to a motion detection profile of a particular sensor under test. That is, the number and sequence of charging the sensing windows of the detector in the PIR sensor may be controlled, for producing differential pulses for reliably triggering a response by the PIR sensor.

It will be appreciated that in the case of charging more than one detection subzone with infrared radiation, the test device has to be suitably equipped therefore or one may install plural test devices, each arranged for charging a single detection subzone of a group.

Among others for automated operation of the test method, the sensor is operatively connected to a monitoring system for monitoring a response by the sensor, wherein the step of generating infrared radiation by the test device is controlled by a control unit of the monitoring system and/or a control circuit of the test device.

The control circuit and/or the control unit may comprise a programmable processor, microcontroller or other programmable control equipment and storage or memory for storing a radiation profile of a sensor under test. The control circuit and/or the control unit may be further arranged for setting the monitoring system in a test mode, implementing a particular delay time for heating up of a thermal infrared radiation device, for example, and for repeating a test once same is not successful, for example, or in accordance with a particular test schedule such as may be required by an insurance company or the like in case of alarm monitoring, for example, and for logging test data in the storage. The control circuit and/or the control unit may have an interface for remote control and communication purposes.

In an embodiment, the step of determining at least one detection subzone of a detection zone at a position remote from the sensor in the field of view thereof is supported by replacing the sensor under test by a tracing device, arranged for radiating different electromagnetic radiation in a first and second detection subzone of at least one zone in the field of view of the sensor under test, such that a subzone is determined from detecting the electromagnetic radiation.

The different electromagnetic radiation may be provided by radio wave type radiation having different frequencies, or radiation at a same frequency but differently modulated, for example. The test device may be provided with a suitable electromagnetic radiation detector, or the radiation may be detected by a separate, auxiliary detecting device, for example.

In an embodiment, the tracing device is arranged for radiating differently coloured visible light and wherein a detection subzone, i.e. a detection subzone of the first or second type, for example, is visibly determined from a light colour allocated to the respective subzone of a detection zone.

For example, in a first detection subzone, green coloured light may be emitted and in a second detection zone red coloured light. By viewing the light thus projected at wall in the field of view of the PIR sensor, i.e. the radiation field of view of the tracing device, a person can easily determine a particular subzone and corresponding position for installing the test device as outlined above, not requiring particular skills or knowledge of the PIR sensor under test or the test method itself.

In an example not encompassed by the present invention, for supporting the determining of at least one first detection subzone of a detection zone of a PIR sensor under test, a tracing device is provided for use with a sensor to be tested, which sensor having an infrared radiation detector and a detection window formed by a beamforming part defining a detection range or a detection field of view, wherein the beamforming part is arranged for directing infrared radiation in the field of view at the infrared radiation detector, the field of view being comprised of a plurality of spatially adjacent detection zones and each detection zone being comprised of first and second adjacent detection subzones. The tracing device being adapted for radiating different electromagnetic radiation in a first and second detection subzone of at least one detection zone in the field of view of the passive infrared motion detection sensor to be tested, in particular for radiating differently coloured visible light in a first and second detection subzone.

In a further example, the tracing device comprises a housing arranged for mounting in a holder of a PIR sensor to be tested, for replacing a sensor part thereof, the tracing device comprises a radiation module comprising at least two electromagnetic radiation sources arranged for radiating mutually different electromagnetic radiation, and a beamforming device arranged for radiating the mutually different electromagnetic radiation in a first and second detection subzone in at least one detection zone of a field of view of the beamforming device adapted to a particular sensor to be tested.

In this example, the tracing device comprises a beamforming part equivalent to the beamforming part of the sensor under test, whereas at a position comparable to the position of the sensing windows of the detector part of the PIR sensor, the electromagnetic radiating sources are mounted and arranged for radiating mutually different electromagnetic radiation or energy. In the case of emitting visible light, the radiating components may comprise light emitting diodes, LED, arranged or powered for emitting green and red light, respectively, or any other colours that can be easily distinguished from each other.

In a second aspect there is provided an infrared radiation generating test device arranged for testing a passive infrared motion detection sensor, which sensor having an infrared radiation detector and a detection window formed by a beamforming part defining a detection range or a detection field of view, the beamforming part being arranged for directing infrared radiation in the field of view at the infrared radiation detector, the field of view being comprised of a plurality of spatially adjacent detection zones and each detection zone being comprised of first and second adjacent detection subzones, the test device having a housing comprising an infrared radiation generator arranged for generating infrared radiation for exciting the sensor, and a control unit arranged for operating a closable aperture of the test device.

The infrared radiation generator comprises an electrically powered plate or disc shaped thermal infrared radiation surface dimensioned such that infrared radiation is generated in a single detection subzone, and the test device comprises a closable aperture for external emission of infrared radiation generated by the infrared radiation generator, wherein the control unit is arranged for controlling emission of infrared radiation by the test device by opening and closing the aperture for emitting a radiation profile providing an amount of infrared energy creating a differential signal between the single detection subzone and its adjacent detection subzone for triggering a response by the sensor.

A radiation generator formed by a plate or disc shaped radiation surface provides a rather concentrated radiation beam having a restricted or substantially restricted beam width along its propagation direction. This, different from a point radiation source or a line radiation source, such as a filament radiator, emitting a rather diffuse, diverging radiation beam that is not suitable for radiating infrared radiation in a single detection subzone of a sensor, in particular when the radiator is positioned at a relative large distance of the sensor. Such a radiator requires a rather expensive collimator device or lens to form a beam of restricted width for the purpose of the present invention. The test device according to the invention emits in a cost effective manner a beam of infrared radiation having a restricted or substantially restricted beam width along its propagation direction and facilitates an easy positioning of the test device for substantially radiating in a respective detection subzone of a sensor to be tested, even at larger distances, and when the test device cannot be positioned at its preferred or ideal position due to restrictions in the environment covered by the field of view of the sensor. It will be appreciated that the absence of a rather expensive and heavy collimator or lens makes the test device according to the invention in particular suitable for economic, large scale use thereof.

The control circuit may comprise a programmable processor, a microcontroller or other programmable control equipment, such as a field-programmable gate array, FPGA, a programmable application specific integrated circuit, ASIC, and storage or memory devices. Further, the control circuit may be arranged for exchanging control signals with a control unit of a monitoring system for monitoring a response by a sensor under test, for controlling operation of the test device by the monitoring system.

In the test device according to the invention, the infrared radiation generator is an electrically powered thermal infrared radiation source. For example a temperature controlled resistive radiator, comprised of an array of resistive heating components mounted and distributed at a preferably black or dark-coloured plate or disc. The resistive heating components, in an embodiment of the generator, may be formed by a pattern of electrically conductive tracks on a printed circuit board. The thickness, length and width of the tracks, among others, determine the amount of radiation generated. It has been found that a plate or disc having dimensions in the range of 8 x 8 cm up to 12 x 12 cm or comparable, may be positioned at a distance from about 2 m up to 20 m and even above, for charging a single detection subzone of a PIR sensor, providing some play or coarseness in the preferred position of the test device. Such that no particular skills are required for positioning or fine tuning of the position of the test device, thus facilitating a relative swift installation even though the radiation emitted is not visible for the human eye.

The test device may further comprise a temperature sensor for measuring ambient temperature, wherein the control circuit is arranged for powering the thermal infrared radiation source at a temperature differing with a set value above ambient temperature, within a temperature range. To this end the thermal infrared radiation source may be powered by a temperature stabilisation circuit.

In an embodiment of the test device, the control circuit is arranged for controlling opening and closing of the aperture for generating a pulse type radiation profile, having a predetermined rising or leading edge, a falling or trailing edge and a pulse width, simulating a human body moving or walking in the field of view of the sensor to be tested.

Generating the radiation profile by controlling the opening and closing of a radiation aperture provides that a particular profile can be created without each time taking into account delay times for heating up and cooling down of a thermal radiator, for example.

In another embodiment of the test device, the control circuit is arranged for partially opening the aperture, for controlling the beam width of the emitted infrared radiation, in particular wherein the aperture can be opened and closed by a plurality of parallel elongated shutters, wherein the control circuit is arranged for operating an opening angle of the shutters for controlling the beam width.

By controlling the opening of the aperture, the predominantly charging of a particular detection subzone by infrared radiation may be effectively controlled.

In particular for operation with an advanced PIR sensor, comprising detection zones having more than two detection subzones, the test device in a further embodiment thereof comprises either one or both of a plurality of plate or disc shaped infrared radiation generators and a plurality of closable apertures arranged for emitting infrared radiation in a plurality of spatially arranged radiation beams, for independently predominantly radiating infrared radiation in a radiation beam adapted to a first detection subzone of a sensor under test.

In a fourth aspect, there is provided a monitoring system, comprising at least one passive infrared motion detection sensor operatively connected to a control unit of the monitoring system, for monitoring a response by the at least one sensor, and at least one test device as disclosed above, operatively connected to the control unit. The monitoring system may be arranged for testing at least one sensor in accordance with the method disclosed above.

The monitoring system may be any of an alarm system, a motion controlled switching system, or the like.

The above-mentioned and other features and advantages of the disclosure will be best understood from the following description referring to the attached drawings. In the drawings, like reference numerals denote identical parts or parts performing an identical or comparable function or operation.

### Brief description of the drawings

Figure 1 shows schematically, perspectively, a typical prior art passive infrared, PIR, motion detection sensor.
Figure 2 shows schematically, not to scale, the detection field of view of the PIR sensor of Figure 1, seen from the top.
Figure 3 shows, schematically, in top view, a prior art detector for use in the PIR sensor of Figure 1, having two sensing windows.
Figure 4 shows, schematically, in top view, a prior art detector for use in a PIR sensor, having four sensing windows.
Figure 5 shows an example of a radiation profile for triggering an PIR sensor in accordance with the present disclosure.
Figure 6 shows, schematically, in top view, a radiation module for use in a tracing device in accordance with the present disclosure.
Figure 7 shows schematically, perspectively, an embodiment of a test device in accordance with the present disclosure.
Figure 8 shows schematically, in front view, a further embodiment of a test device in accordance with the present disclosure.
Figure 9 shows an electric circuit diagram of a test device in accordance with the present disclosure.
Figure 10 shows an electric circuit diagram of a monitoring system in accordance with the present disclosure.

### Detailed description

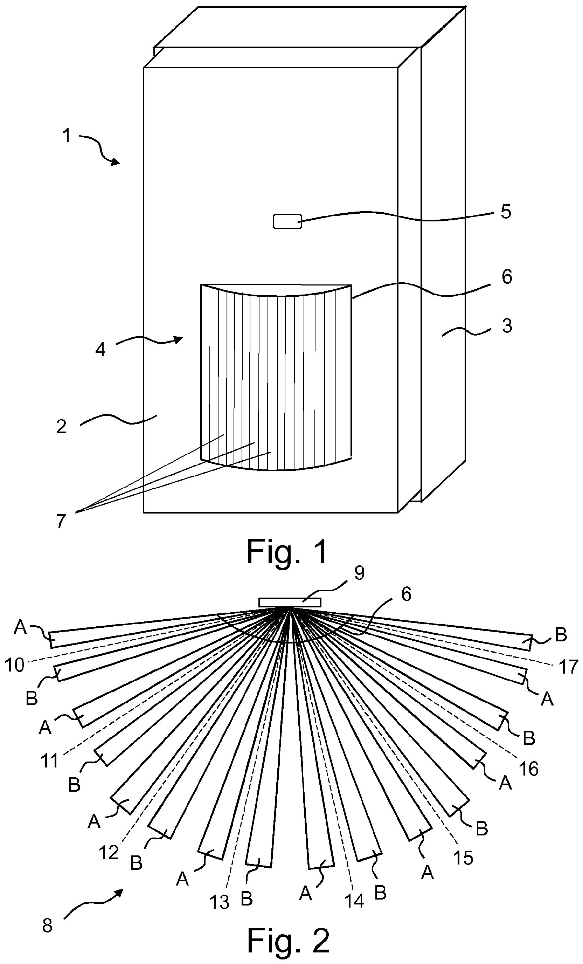

Figure 1 shows a typical embodiment of a prior art passive infrared, PIR, motion detection sensor 1. The PIR sensor 1 is comprised of a detection or sensing part 2 that is removably attached to a holder 3. The holder 3 is typically fixedly mounted at a wall or ceiling in a room to be monitored. The PIR sensor has a detection window 4 for detecting or sensing motion by an infrared energy radiating body, such as human body, that moves along or passes the window 4. Reference numeral 5 designates a control or signal light that typically lights up when movement of an infrared energy radiating body is detected by the PIR sensor 1.

Typically, the window 4 is formed by a beam forming part 6, such as an infrared transparent or transmissive lens, for example a Fresnel type lens, having multiple facets 7 defining a particular detection range or field of view, FOV, of the PIR sensor 1, such as the FOV 8 shown in Figure 2. The beamforming part 6 directs infrared radiation in the FOV 8 at the actual detecting part of the PIR sensor 1, formed by an infrared radiation detector 9.

The multi facetted beam forming part 6 of Figure 1 provides an FOV 8 comprised of imaginary, adjacently arranged, sliced type detection zones 10 - 17, each schematically indicated by a dotted line. Figure 2 shows the FOV 8 in top view, such that the imaginary sliced detection zones 10 - 17 extend in a direction perpendicular to the plane of the drawing. It will be appreciated that the number and type of detection zones 10 -17 depends on the type of lens that is used for focussing the infrared energy at the detector 9.

In the embodiment shown in Figure 2, each detection zone 10 - 17 is comprised by two adjacent detection subzones, i.e. a first detection subzone A and second detection subzone B.

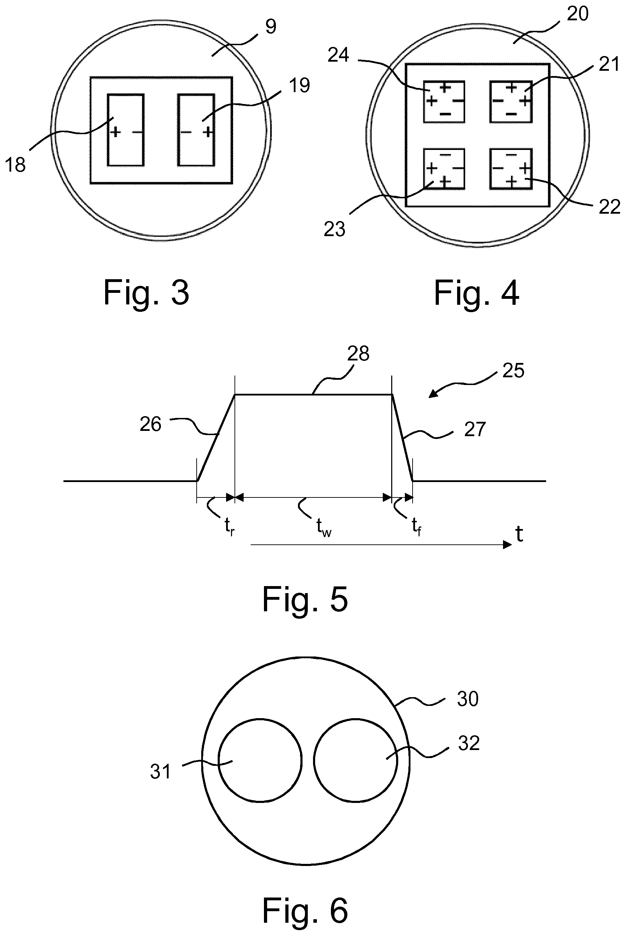

Figure 3 schematically shows the detector 9 in top view. The detector 9 has two adjacently arranged sensing windows, a first sensing window 18 and a second sensing window 19. By the beamforming part 6, the detection zones 10 - 17 of the PIR sensor 1 are aligned with the detector 9 such that for each detection zone infrared radiation energy in a first detection subzone A is directed at the first sensing window 18, and infrared radiation energy in a second detection subzone B is directed at the second sensing window 19.

When the detector 9 is in its idle or quiescent state, i.e. when there is no moving infrared energy source in the FOV 8, both windows 18, 19 sense the same amount of infrared radiation generated in the ambient of the PIR sensor 1. Such as infrared radiation energy radiated by the walls and furniture in a room, or outdoors by the sun. The detector 9, i.e. the processing or control electronics connected at the output of the detector 9, are arranged such that when both detection subzones A, B of a detection zone 10 - 17 substantially receive a same amount of infrared radiation energy at the same time, no response signal is provided.

However, when a thermal radiation source, such as a warm body like a human or larger animal at a temperature above ambient temperature moves in the FOV 8 of the IR sensor, from one detection zone to the other, the detection subzones A, B are sequentially charged with infrared radiation energy from the body (not shown).

Suppose that the body is moving from detection zone 12 to detection zone 15 in the FOV 8. Then the radiation energy emitted by the body is first captured by detection subzone 12A and directed at the first sensing window 18 of the detector 9, such that the infrared radiation energy at the detector 9 increases. This causes a positive differential infrared energy change between the first window 18 and the second window 19, producing for example a positive going pulse signal, as indicated by the order of the + and - signs next to the first sensing window 18. When the body moves further and eventually leaves the detection subzone 12B, the detector 9 experiences a decrease in infrared radiation energy, producing a negative going pulse signal, as indicated by the order of the - and + signs next to the second sensing window 19. Accordingly, the detector 9 produces differential pulse signals. The changing pulses may trigger a response by the PIR sensor, i.e. by the control electronics thereof processing the pulses.

It will be appreciated that when the body moves further in the FOV 8, to detection zone 13, and so on, a sequence of differential pulses will be generated by the detector. From the order of the pulses and the time between the pulses of different detection zones the control electronics of the PIR sensor 1 may derive the direction and speed by which the body moves through the FOV 8.

Most PIR sensors comprise two sensing windows. However PIR sensors comprising detectors having four or even more sensing windows, such as the detector 20 shown in Figure 4 are also known in practice. It will be appreciated that in the case of more than two sensing windows, such as the four sensing windows 21 - 24, movement of a body in three dimensions can be established.

The moving body will cause differential pulses between adjacent windows of the detector 20, as schematically indicated by the + and - signs next to the windows 21 - 24. Likewise as with the detector 9 of Figure 3, the sensing windows 21 - 24 may be aligned by a beamforming part of a PIR sensor such that each detection zone consists of four detection subzones, which may be designated first and second detection subzones A, B such that the windows 21 and 23 form a first group of first detection subzones A and the windows 22, 24 form a second group of second subzones B. To this end one may think of a beamforming part such that each detection subzone spans a particular solid angle. A PIR sensor of this type is, for example, suitable for being mounted at the ceiling in the middle of a room.

The number of and the order and speed by which differential pulses are produced by the detector 20 may be used for determining whether to respond, that is, to determine a particular detection or response profile at which the PIR sensor provides a response, such as an alarm or, for example, switches lights in particular order in a room.

The present disclosure is based on the insight that, for testing purposes, a reliable response of a PIR sensor can be provoked or triggered, by charging a respective single detection subzone of a detection zone of the PIR sensor under test with infrared radiation, thereby creating a differential signal between the subzones of the PIR sensor. That is, by charging the single subzone in accordance with a particular radiation profile, corresponding to a response profile for which the PIR sensor provides a response. Thus, a test device emitting infrared radiation for exciting the detector of a PIR sensor is to be installed at a position in the FOV of the PIR sensor for predominantly generating infrared radiation in a single first detection subzone A, for example.

Accordingly, in a first step, at the position at which the test device is to be arranged, such a first detection subzone in the FOV of the PIR sensor under test thereof has to be established. Once positioned, a reliable response by the PIR sensor, such as the PIR sensor 1, can be provided by generating infrared radiation by the test device.

A radiation profile may comprise, for example, a pulse type infrared radiation profile 25 as schematically indicated in Figure 5. The profile 25 is characterized by a rising or leading edge 26, a falling or trailing edge 27 and a pulse width 28 during which an amount of infrared energy is radiated by the test device at a level H that can be sensed by the PIR sensor under test, taking into account the geographical distance between the test device and the PIR sensor.

The leading edge 26 may be characterized by a particular rise time tᵣ, the trailing edge may be characterized by a particular fall time t_{f} and the pulse width may be characterized by the time t_{w}, for example, as shown in Figure 5. In an example, the rise time tᵣ and the fall time t_{f} both amount 150 ms, and the pulse width t_{w} has a length of 3000 ms, typically simulating a walking or moving human body in the FOV of a PIR sensor.

In case of a detector having more than two sensing windows, such as the detector 20 discussed above, dependent on a particular detection or response profile of the detector, it may be required to charge two or even more subzones A thereof, either at the same time or in a particular order. For example charging the respective subzones by a pulse type charging as shown in Figure 5.

In general, charging a single subzone A or B of a PIR sensor will reliably provoke a response signal for testing purposes, that is to test whether the PIR sensor is alive and not tampered with, for example.

The test device, after the correct positioning thereof, for testing purposes, may be fixedly and/or permanently installed at the position determined. For example, mounted on a wall in the FOV of the PIR sensor under test. Then, each time by controlling the test device for emitting infrared radiation, the correct operation of the PIR sensor can be tested in an automated manner.

It will be appreciated that in the case of charging more than one detection subzone with infrared radiation, the test device has to be suitably equipped therefore or one may install plural test devices, each arranged for charging a single detection subzone.

For determining a particular detection subzone at a position remote from the PIR sensor under test a tracing support device is provided. This tracing device is arranged such that, for example in case of a PIR sensor 1 as shown in Figure 1, in the sensing or detection part 2 thereof the detector 9 is replaced by a radiation module 30, as shown in top view in Figure 6.

In the case of a detector 9 having two sensing windows, the radiation module 30 likewise comprises two radiation components 31, 32, arranged for radiating mutually different electromagnetic radiation in a first A and second B detection subzone of each zone 10 - 17 in the field of view 8 of the PIR sensor 1. Accordingly, by detecting the particular electromagnetic radiation at the position at which the test device is to be installed, a particular subzone of the PIR sensor under test can be determined. That is, the sensing part 2 of the PIR sensor 1 under test has to be detached from the holder 3 and replaced by an identical sensing part 2, however in which the detector 9 is replaced by the radiation module 30. Power for the radiation module 30 may be extracted from the monitoring system to which the PIR sensor 1 connects and/or the tracing device may have an own on-board battery power supple, for example.

The different electromagnetic radiation of the radiation components 31, 32 may be provided by a radio wave type radiation having different frequencies, or radiation at a same frequency but differently modulated, for example. For detection of a particular subzone, the test device may be provided with a suitable electromagnetic radiation detector, or the radiation may be detected by a separate, auxiliary detecting device, for example manually.

In an example not falling within the scope of the attached claims, the radiation module 30 comprises light emitting diodes as radiation components 31, 32 for radiating differently coloured visible light. The first (or second) detection subzone may then be visibly determined from a particular light colour allocated to the first (or second) detection zone. For example, in a first detection subzone A, green coloured light may be emitted and in a second detection zone B red coloured light. By viewing the light thus projected at wall in the field of view of the PIR sensor under test, i.e. the radiation field of view of the tracing device, a person can easily determine a particular subzone A and B from its colour, and hence a corresponding position for installing the test device as outlined above.

Dependent on the type and design of a PIR sensor under test, the tracing device comprises a housing arranged for mounting in a holder of a particular PIR sensor to be tested. The beam forming part of the tracing device may, for example, be made replaceable for adapting same to the beamforming part of a particular PIR sensor.

It will be appreciated that in case of a detector 20 having a plurality of sensing windows 21 - 24, the radiation module has to comprise a same number of radiation components, designed such that the detection subzones of a particular detection zone can be distinguished.

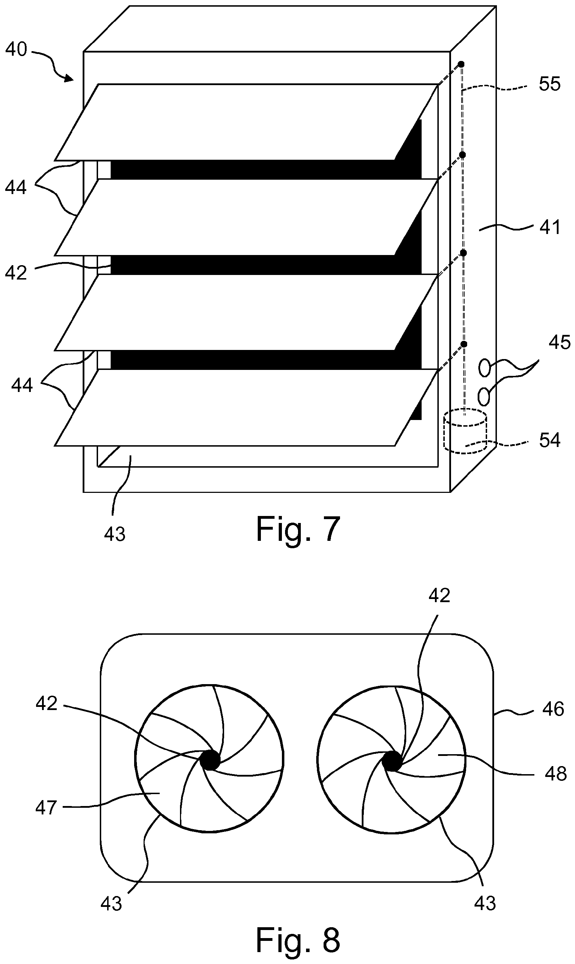

Figure 7 shows an embodiment of an infrared radiation generating test device 40 in accordance with the present disclosure, arranged for testing a PIR sensor as discussed above, such as the PIR sensor 1. The test device 40 has a housing 41 and comprises an infrared radiation generator 42 arranged inside the housing 41, and designed for generating infrared radiation for exciting a PIR sensor.

The housing 41, at the front part thereof, comprises a closable aperture 43 for external emission of infrared radiation generated by the infrared radiation generator 42. The aperture 43 can be opened and closed by a plurality of parallel elongated shutters 44, that can swing around a hinge shaft, and may be operated in concert or individually by suitable driving means, for example a single electromotor 54, such as a stepper motor, and mechanical drive means, such as a hingedly connected linkage 55 indicated by dashed lines, by which the shutters 44 connect, or individual motors each operating at a particular shutter 44, for operating an opening angle of the shutters for controlling the beam width of the infrared radiation beam emitted by the test device 40.

Generating the radiation profile by controlling the opening and closing of the radiation aperture 43 provides that a particular radiation profile can be created without each time taking into account delay times for heating up and cooling down of the thermal radiator 42, for example. Further, by controlling the opening of the aperture 43, the amount of infrared radiation for charging a particular detection subzone with infrared radiation may be effectively controlled.

The test device 40 comprises control logic (not shown), for controlling operation of the device and powering and signal input/output connectors 45.

Instead of parallel shutters 44, the radiation aperture 43 may also be opened and closed by, for example, so-called photo shutters 47, 48 as schematically shown with another embodiment of a test device 46 in accordance with the present disclosure. The test device 46 comprise two independently controllable shutters 47, 48, for example for charging two detection subzones of PIR sensor under test, or for charging a first subzone A or a second subzone B of different detection zones for simulating a walking body in the FOV of a PIR sensor under test, for example.

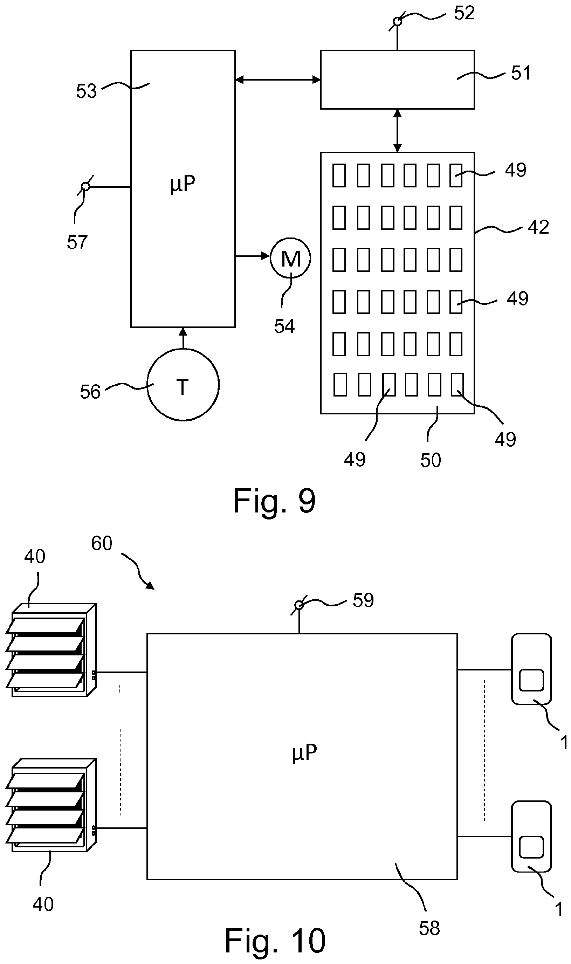

The electric circuit diagram shown in Figure 9 is an example of the control electronics of the test device 40. The infrared radiation generator 42 is an electrically powered thermal infrared radiation source, comprised of an array of resistive heating components 49 mounted and distributed at a black plate or disc 50. It has been found that a plate or disc having surface dimensions in the range of 8 x 8 cm up to 12 x 12 cm or comparable, may be positioned at a distance from about 2 m up to 20 m and even above, for charging a single detection subzone of a PIR sensor.

The plate or disc 50 not necessarily requires a black radiation surface. The resistive heating components may be comprised by a pattern of electrically conductive tracks on a printed circuit board, such as copper tracks. For example one or a plurality of separately powered meander shaped patterns. The material, thickness, length and width of the tracks of a pattern, among others, determine the amount of radiation generated.

In operation, the infrared radiation generator 42 produces infrared radiation in the so-called long wavelength infrared, LWIR, transmission band that runs from 8000 to 14,000 nm. This type of radiation is related to the temperature of an object, such as a human or animal body, that produce energy peaks around 10,000 nm.

The infrared radiation generator 42 is powered by a temperature stabilisation circuit 51, under control of a control circuit 53 to which a temperature sensor 56 connects, for measuring ambient temperature T. The temperature stabilisation circuit 51 comprises an input 52 for powering. The control circuit 53 is arranged for controlling the thermal infrared radiation generator 42 through the temperature stabilisation circuit 51 at a temperature that differs with a set value above ambient temperature, among others for reducing power consumption at low ambient temperatures. The set value is, for example, a value above the human body temperature. An operating range of the test device 40 ranges from an ambient temperature of about -20 °C up to about 70 °C, for example. In this way, the test device 40 may be used for testing both inside and outside mounted PIR devices.

The control circuit 53 is arranged for controlling opening and closing of the aperture 43 of the test device for generating a radiation profile for triggering a response by the sensor under test, such as profile shown in Figure 5. For example, by controlling a single or plural shutter motors, generally designated by reference numeral 54.

Among others for automated test operation, the control circuit 53 may be operatively connected to a monitoring system 60, for monitoring a response by a PIR sensor, as schematically shown in Figure 10. The monitoring system 60 comprises a control unit 58 to which a plurality of PIR sensors 1 and test devices 40 connect, for example. The test devices 40 are installed and positioned for triggering a response by an associated PIR sensor 1.

The control circuit 53 and/or the control unit 58 may comprise a programmable processor, microcontroller or other programmable control equipment such as a field-programmable gate array, FPGA, or a programmable application specific integrated circuit, ASIC, and storage or memory (not shown) for storing a radiation profile of a sensor under test. The control circuit 53 and/or control unit 58 may be further arranged for setting the monitoring system 60 in a test mode, implementing a particular delay time for heating up of a thermal infrared radiation test device 40, for example, and for repeating a test once same is not successful, for example, or to operate in accordance with a particular test schedule such as may be required by an insurance company or the like in case of alarm monitoring, for example, and for logging test data in the storage. The control circuit 53 and/or the control unit 58 may have an interface 57, 59 for remote control and communication purposes.

In particular for operation with an advanced PIR sensor, comprising detection zones having more than two detection subzones, the test device 40, 46 may comprise a plurality of infrared radiation generators 42 for emitting infrared radiation in a plurality of spatially arranged radiation beams, for example.

The present disclosure is not limited to the embodiments as disclosed above, and can be modified and enhanced by those skilled in the art beyond the scope of the present disclosure as disclosed in the appended claims without having to apply inventive skills.

Those skilled in the art will appreciate other variations to the disclosed embodiments but comprised by the appended claims from practicing the claimed disclosure and /or from a study of the description, drawings and claims. In the claims, the word "comprising" does not exclude other elements or steps, and the indefinite article "a" or "an" does not exclude a plurality. A single processor or other digital processing unit may fulfil the functions of several items recited in the claims and features recited in mutually different dependent claims may be combined. Reference signs in the claims, if any, are provided for illustrative purposes only.

## Claims

1. A method of testing a passive infrared motion detection sensor (1) using a test device (40; 46) arranged for generating infrared radiation for exciting said sensor (1), said sensor (1) having an infrared radiation detector (9) and a detection window (4) formed by a beamforming part (6) defining a detection range or a detection field of view (8), wherein said beamforming part (6) is arranged for directing infrared radiation in said field of view (8) at said infrared radiation detector (9), said field of view (8) being comprised of a plurality of spatially adjacent detection zones (10-17) and each detection zone being comprised of first (A) and second (B) adjacent detection subzones, **characterized in that** said method comprises the steps of:
- determining a single detection subzone (A; B) of a detection zone (10-17) at a position remote from said sensor (1) in said field of view (8) thereof,
- arranging said test device (40; 46) at said position for generating infrared radiation in said determined single detection subzone (A; B), and
- generating infrared radiation in said determined single detection subzone by said test device (40; 46) in accordance with a radiation profile (25) providing an amount of infrared energy creating a differential signal between said determined single detection subzone and its adjacent detection subzone for triggering a response by said sensor (1).

2. The method according to claim 1, wherein each detection zone (10-17) of said sensor (1) is comprised of a plurality of first (A) and second (B) adjacent detection subzones, wherein said step of determining comprises determining, at said position, a first group (21, 23) of first detection subzones (A) of a detection zone (10-17) or a second group (22, 24) of second detection subzones (B) of a detection zone (10-17), and said step of arranging comprises arranging said test device (40; 46) at said position for simultaneously or independently generating infrared radiation in each first detection subzone (A) of said determined first group (21, 23) or in each second detection subzone (B) of said determined second group (22, 24).

3. The method according to claim 2, wherein said step of generating infrared radiation comprises generating infrared radiation in said detection subzones (A; B) of said determined first (21, 23) or second group (22, 24) in accordance with a motion detection profile of said sensor (1).

4. The method according to any of the previous claims, wherein said radiation profile comprises a pulse type radiation profile (25) having a predetermined rising or leading edge (26), a falling or trailing edge (27) and a pulse width (28).

5. The method according to any of the previous claims, wherein said sensor (1) operatively connects to a monitoring system (60) for monitoring a response by said sensor (1), wherein said step of generating infrared radiation by said test device (40; 46) is controlled by at least one of a control unit (58) of said monitoring system (60) and a control circuit (53) of said test device (40; 46).

6. The method according to any of the previous claims, wherein said step of determining a single detection subzone (A; B) of a detection zone (10-17) at a position remote from said sensor (1) in said field of view (8) thereof comprises replacing said sensor (1) by a tracing device (30) arranged for radiating different electromagnetic radiation in a first (A) and second (B) detection subzone of at least one zone (10-17) in said field of view (8) of said sensor (1), and wherein a single detection subzone (A; B) is determined from detecting said electromagnetic radiation.

7. The method according to claim 6, wherein said tracing device (30) is arranged for radiating differently coloured visible light and wherein a single detection subzone (A; B) is determined from a light colour allocated to a respective detection subzone (A; B).

8. An infrared radiation generating test device (40; 46) arranged for testing a passive infrared motion detection sensor (1), said sensor (1) having an infrared radiation detector (9) and a detection window (4) formed by a beamforming part (6) defining a detection range or a detection field of view (8), said beamforming part (6) being arranged for directing infrared radiation in said field of view (8) at said infrared radiation detector (9), said field of view (8) being comprised of a plurality of spatially adjacent detection zones (10-17) and each detection zone being comprised of first (A) and second (B) adjacent detection subzones, said test device (40; 46) having a housing (41) comprising an infrared radiation generator (42) arranged for generating infrared radiation for exciting said sensor (1), and a control unit (53) arranged for operating a closable aperture (43) of said test device (40; 46), **characterized in that** said infrared radiation generator (42) is an electrically powered plate or disc shaped thermal infrared radiation surface (50) dimensioned such that infrared radiation is generated in a single detection subzone, and said test device (40; 46) comprises said closable aperture (43) for external emission of infrared radiation generated by said infrared radiation generator (42), wherein said control unit (53) is arranged for controlling emission of infrared radiation by said test device (53) by opening and closing said aperture (43) for emitting a radiation profile (25) providing an amount of infrared energy creating a differential signal between said single detection subzone and its adjacent detection subzone for triggering a response by said sensor (1).

9. The test device according to claim 8, wherein said electrically powered plate or disc shaped radiation surface has dimensions in a range of 8 x 8 cm up to 12 x 12 cm for triggering a response by said sensor (1) at a distance of 2 m up to 20 m from the sensor (1).

10. The test device according to claim 8 or 9, wherein said control unit (53) is arranged for controlling opening and closing of said aperture (43) for generating a pulse type radiation profile (25), having a predetermined rising or leading edge (26), a falling or trailing edge (27) and a pulse width (28).

11. The test device according to claim 8, 9 or 10, wherein said control unit (53) is arranged for partially opening said aperture (43), for controlling a beam width of said emitted infrared radiation, in particular wherein said aperture (43) can be opened and closed by a plurality of parallel elongated shutters (44), wherein said control unit (53) is arranged for operating an opening angle of said shutters (44) for controlling said beam width.

12. The test device according to claim 8, 9, 10 or 11, further comprising a temperature sensor (56) for measuring ambient temperature, wherein said control unit (53) is arranged for powering said thermal infrared radiation source (50) at a temperature differing with a set value above ambient temperature, within a temperature range.

13. The test device according to claim 8, 9, 10, 11 or 12, comprising at least one of a plurality of plate or disc shaped infrared radiation generators (42) and a plurality of closable apertures (43; 47, 48) arranged for emitting infrared radiation in a plurality of spatially arranged radiation beams, for simultaneously or independently radiating infrared radiation in a radiation beam adapted to a single detection subzone (A; B) of a sensor (1) under test.

14. Monitoring system (60), comprising at least one passive infrared motion detection sensor (1) operatively connected to a control unit (58) of said monitoring system (60) for monitoring a response by said at least one sensor (1), and at least one test device (40; 46) in accordance with any of the claims 8 - 13, operatively connected to said control unit (58), and arranged for testing said at least one sensor (1) in accordance with a method of any of the claims 1 - 7.

## Patentansprüche

1. Verfahren zum Testen eines passiven Infrarot-Bewegungsdetektionssensors (1) unter Verwendung einer Testvorrichtung (40; 46), die eingerichtet ist zum Erzeugen von Infrarotstrahlung zum Anregen des Sensors (1), wobei der Sensor (1) einen Infrarot-Strahlungsdetektor (9) und ein Detektionsfenster (4) aufweist, das durch ein strahlformendes Teil (6) gebildet wird, das einen Detektionsbereich oder ein Detektionssichtfeld (8) definiert, wobei das strahlformende Teil (6) eingerichtet ist, um Infrarotstrahlung in das Sichtfeld (8) an dem Infrarot-Strahlungsdetektor (9) zu richten, wobei das Sichtfeld (8) eine Vielzahl von räumlich benachbarten Detektionszonen (10-17) umfasst und jede Detektionszone erste (A) und zweite (B) benachbarte Detektionsunterzonen umfasst, **dadurch gekennzeichnet, dass** das Verfahren die Schritte umfasst:
- Bestimmen einer einzelnen Detektionsunterzone (A; B) einer Detektionszone (10-17) an einer vom Sensor (1) entfernten Position in dessen Sichtfeld (8),
- Anordnen der Testvorrichtung (40; 46) an der Position zum Erzeugen von Infrarotstrahlung in der bestimmten einzelnen Detektionsunterzone (A; B), und
- Erzeugen von Infrarotstrahlung in der bestimmten einzelnen Detektionsunterzone durch die Testvorrichtung (40; 46) gemäß einem Strahlungsprofil (25), das eine Menge an Infrarotenergie bereitstellt, die ein Differenzsignal zwischen der bestimmten einzelnen Detektionsunterzone und ihrer benachbarten Detektionsunterzone erzeugt, um eine Reaktion durch den Sensor (1) auszulösen.

2. Verfahren nach Anspruch 1, wobei jede Detektionszone (10-17) des Sensors (1) eine Vielzahl von ersten (A) und zweiten (B) benachbarten Detektionsunterzonen umfasst, wobei der Schritt des Bestimmens das Bestimmen, an der Position, einer ersten Gruppe (21, 23) von ersten Detektionsunterzonen (A) einer Detektionszone (10-17) oder einer zweiten Gruppe (22, 24) von zweiten Detektionsunterzonen (B) einer Detektionszone (10-17) umfasst, und der Schritt des Anordnens das Anordnen der Testvorrichtung (40; 46) an der Position zum gleichzeitigen oder unabhängigen Erzeugen von Infrarotstrahlung in jeder ersten Detektionsunterzone (A) der bestimmten ersten Gruppe (21, 23) oder in jeder zweiten Detektionsunterzone (B) der bestimmten zweiten Gruppe (22, 24) umfasst.

3. Verfahren nach Anspruch 2, wobei der Schritt des Erzeugens von Infrarotstrahlung das Erzeugen von Infrarotstrahlung in den Detektionsunterzonen (A; B) der bestimmten ersten (21, 23) oder zweiten Gruppe (22, 24) gemäß einem Bewegungsdetektionsprofil des Sensors (1) umfasst.

4. Verfahren nach einem der vorhergehenden Ansprüche, wobei das Strahlungsprofil ein pulsartiges Strahlungsprofil (25) mit einer vorbestimmten steigenden oder vorderen Flanke (26), einer fallenden oder hinteren Flanke (27) und einer Pulsweite (28) umfasst.

5. Verfahren nach einem der vorhergehenden Ansprüche, wobei der Sensor (1) funktionsfähig mit einem Überwachungssystem (60) verbunden ist, um eine Reaktion des Sensors (1) zu überwachen, wobei der Schritt des Erzeugens von Infrarotstrahlung durch die Testvorrichtung (40; 46) durch wenigstens eine Steuereinheit (58) des Überwachungssystems (60) und eine Steuerschaltung (53) der Testvorrichtung (40; 46) gesteuert wird.

6. Verfahren nach einem der vorhergehenden Ansprüche, wobei der Schritt des Bestimmens einer einzelnen Detektionsunterzone (A; B) einer Detektionszone (10-17) an einer vom Sensor (1) entfernten Position in dessen Sichtfeld (8), das Ersetzen des Sensors (1) durch eine Markiervorrichtung (30), die zum Abstrahlen unterschiedlicher elektromagnetischer Strahlung in einer ersten (A) und zweiten (B) Detektionsunterzone wenigstens einer Zone (10-17) im Sichtfeld (8) des Sensors (1) eingerichtet ist, umfasst und wobei eine einzelne Detektionsunterzone (A; B) aus dem Detektieren der elektromagnetischen Strahlung bestimmt wird.

7. Verfahren nach Anspruch 6, wobei die Markiervorrichtung (30) zum Abstrahlen von unterschiedlich gefärbtem sichtbarem Licht eingerichtet ist und wobei eine einzelne Detektionsunterzone (A; B) aus einer einer jeweiligen Detektionsunterzone (A; B) zugeordneten Lichtfarbe bestimmt wird.

8. Eine infrarotstrahlungserzeugende Testvorrichtung (40; 46), die zum Testen eines passiven Infrarot-Bewegungsdetektionssensors (1) eingerichtet ist, wobei der Sensor (1) einen Infrarot-Strahlungsdetektor (9) und ein Detektionsfenster (4) aufweist, das durch ein strahlformendes Teil (6) gebildet wird, das einen Detektionsbereich oder ein Detektionssichtfeld (8) definiert, wobei das strahlformende Teil (6) eingerichtet ist, um Infrarotstrahlung in das Sichtfeld (8) an dem Infrarot-Strahlungsdetektor (9) zu richten, wobei das Sichtfeld (8) eine Vielzahl von räumlich benachbarten Detektionszonen (10-17) umfasst und jede Detektionszone erste (A) und zweite (B) benachbarten Detektionsunterzonen umfasst, wobei die Testvorrichtung (40; 46) ein Gehäuse (41) aufweist, das einen Infrarotstrahlungsgenerator (42), eingerichtet zum Erzeugen von Infrarotstrahlung zum Anregen des Sensors (1), und eine Steuereinheit (53), eingerichtet zum Betreiben einer verschließbaren Öffnung (43) der Testvorrichtung (40; 46), umfasst, **dadurch gekennzeichnet, dass** der Infrarotstrahlungsgenerator (42) eine elektrisch angetriebene platten- oder scheibenförmige thermische Infrarot-Strahlungsfläche (50) ist, die derart bemessen ist, dass Infrarotstrahlung in einer einzigen Detektionsunterzone erzeugt wird, und die Testvorrichtung (40; 46) die verschließbare Öffnung (43) für die externe Abstrahlung von Infrarotstrahlung, die durch den Infrarotstrahlungsgenerator (42) erzeugt wird, umfasst, wobei die Steuereinheit (53) eingerichtet ist zum Steuern der Abstrahlung von Infrarotstrahlung durch die Testvorrichtung (53) durch Öffnen und Schließen der Öffnung (43) zum Abstrahlen eines Strahlungsprofils (25), das eine Menge an Infrarotenergie bereitstellt, die ein Differenzsignal zwischen der einzelnen Detektionsunterzone und ihrer benachbarten Detektionsunterzone erzeugt, um eine Reaktion durch den Sensor (1) auszulösen.

9. Testvorrichtung nach Anspruch 8, wobei die elektrisch angetriebene platten- oder scheibenförmige Strahlungsfläche Abmessungen in einem Bereich von 8 x 8 cm bis 12 x 12 cm aufweist, um eine Reaktion des Sensors (1) in einem Abstand von 2 m bis 20 m vom Sensor (1) auszulösen.

10. Testvorrichtung nach Anspruch 8 oder 9, wobei die Steuereinheit (53) eingerichtet ist zum Steuern des Öffnens und Schließens der Öffnung (43) zum Erzeugen eines pulsartigen Strahlungsprofils (25) mit einer vorbestimmten steigenden oder vorderen Flanke (26), einer fallenden oder hinteren Flanke (27) und einer Pulsweite (28).

11. Testvorrichtung nach Anspruch 8, 9 oder 10, wobei die Steuereinheit (53) eingerichtet ist zum teilweisen Öffnen der Öffnung (43), zum Steuern einer Strahlbreite der abgestrahlten Infrarotstrahlung, insbesondere wobei die Öffnung (43) durch eine Vielzahl von parallelen länglichen Verschlüssen (44) geöffnet und geschlossen werden kann, wobei die Steuereinheit (53) zum Einstellen eines Öffnungswinkels der Verschlüsse (44) eingerichtet ist, zum Steuern der Strahlbreite.

12. Testvorrichtung nach Anspruch 8, 9, 10 oder 11, zudem umfassend einen Temperatursensor (56) zum Messen von Umgebungstemperatur, wobei die Steuereinheit (53) eingerichtet ist, um die thermische Infrarot-Strahlungsquelle (50) bei einer Temperatur zu betreiben, die sich um einem festgesetzten Wert oberhalb von der Umgebungstemperatur unterscheidet, innerhalb eines Temperaturbereichs.

13. Testvorrichtung nach Anspruch 8, 9, 10, 11 oder 12, umfassend wenigstens einen aus einer Vielzahl von platten- oder scheibenförmigen Infrarotstrahlungsgeneratoren (42) und eine Vielzahl von verschließbaren Öffnungen (43; 47, 48), die zum Abstrahlen von Infrarotstrahlung in einer Vielzahl von räumlich angeordneten Strahlungsstrahlen eingerichtet sind, zum gleichzeitigen oder unabhängigen Abstrahlen von Infrarotstrahlung in einem Strahlungsstrahl, welcher an eine einzelne Detektionsunterzone (A; B) eines zu prüfenden Sensors (1) angepasst ist.

14. Überwachungssystem (60), umfassend wenigstens einen passiven Infrarot-Bewegungsdetektionssensor (1), der funktionsfähig mit einer Steuereinheit (58) des Überwachungssystems (60) verbunden ist, um eine Reaktion des wenigstens einen Sensors (1) zu überwachen, und wenigstens eine Testvorrichtung (40; 46) nach einem der Ansprüche 8 - 13, die funktionsfähig mit der Steuereinheit (58) verbunden ist, und eingerichtet ist, um den wenigstens einen Sensor (1) nach einem Verfahren nach einem der Ansprüche 1 - 7 zu testen.

## Revendications

1. Procédé de test d'un capteur de détection de mouvement infrarouge passif (1) en utilisant un dispositif de test (40 ; 46) agencé pour générer un rayonnement infrarouge afin d'exciter ledit capteur (1), ledit capteur (1) ayant un détecteur de rayonnement infrarouge (9) et une fenêtre de détection (4) formée par une partie de formation de faisceau (6) définissant une plage de détection ou un champ de vision de détection (8), où ladite partie de formation de faisceau (6) est agencée pour diriger un rayonnement infrarouge dans ledit champ de vision (8) au niveau dudit détecteur de rayonnement infrarouge (9), ledit champ de vision (8) étant constitué d'une pluralité de zones de détection spatialement adjacentes (10-17) et chaque zone de détection étant constituée de première (A) et deuxième (B) sous-zones de détection adjacentes, **caractérisé en ce que** ledit procédé comprend les étapes consistant :
- à déterminer une sous-zone de détection unique (A ; B) d'une zone de détection (10-17) à une position éloignée dudit capteur (1) dans ledit champ de vision (8) de celui-ci,
- à agencer ledit dispositif de test (40 ; 46) à ladite position pour générer un rayonnement infrarouge dans ladite sous-zone de détection unique déterminée (A ; B), et
- à générer un rayonnement infrarouge dans ladite sous-zone de détection unique déterminée par ledit dispositif de test (40 ; 46) en fonction d'un profil de rayonnement (25) fournissant une quantité d'énergie infrarouge créant un signal différentiel entre ladite sous-zone de détection unique déterminée et sa sous-zone de détection adjacente pour déclencher une réponse par ledit capteur (1).

2. Procédé selon la revendication 1, dans lequel chaque zone de détection (10-17) dudit capteur (1) est constituée d'une pluralité de première (A) et deuxième (B) sous-zones de détection adjacentes, où ladite étape de détermination comprend la détermination, à ladite position, d'un premier groupe (21, 23) de premières sous-zones de détection (A) d'une zone de détection (10-17) ou d'un deuxième groupe (22, 24) de deuxièmes sous-zones de détection (B) d'une zone de détection (10-17), et ladite étape d'agencement comprend l'agencement dudit dispositif de test (40 ; 46) à ladite position pour générer simultanément ou indépendamment un rayonnement infrarouge dans chaque première sous-zone de détection (A) dudit premier groupe déterminé (21, 23) ou dans chaque deuxième sous-zone de détection (B) dudit deuxième groupe déterminé (22, 24).

3. Procédé selon la revendication 2, dans lequel ladite étape de génération d'un rayonnement infrarouge comprend la génération d'un rayonnement infrarouge dans lesdites sous-zones de détection (A ; B) dudit premier (21, 23) ou deuxième (22, 24) groupe déterminé en fonction d'un profil de détection de mouvement dudit capteur (1).

4. Procédé selon l'une des revendications précédentes, dans lequel ledit profil de rayonnement comprend un profil de rayonnement de type à impulsions (25) ayant un front montant ou avant (26), un front descendant ou arrière (27) et une largeur d'impulsion (28) prédéterminés.

5. Procédé selon l'une des revendications précédentes, dans lequel ledit capteur (1) est relié de manière fonctionnelle à un système de surveillance (60) pour surveiller une réponse par ledit capteur (1), où ladite étape de génération d'un rayonnement infrarouge par ledit dispositif de test (40 ; 46) est commandée par au moins l'un(e) d'une unité de commande (58) dudit système de surveillance (60) et d'un circuit de commande (53) dudit dispositif de test (40 ; 46).

6. Procédé selon l'une des revendications précédentes, dans lequel ladite étape de détermination d'une sous-zone de détection unique (A ; B) d'une zone de détection (10-17) à une position éloignée dudit capteur (1) dans ledit champ de vision (8) de celui-ci comprend le remplacement dudit capteur (1) par un dispositif de traçage (30) agencé pour rayonner différents rayonnements électromagnétiques dans des première (A) et deuxième (B) sous-zones de détection d'au moins une zone (10-17) dans ledit champ de vision (8) dudit capteur (1), et où une sous-zone de détection unique (A ; B) est déterminée à partir de la détection dudit rayonnement électromagnétique.

7. Procédé selon la revendication 6, dans lequel ledit dispositif de traçage (30) est agencé pour rayonner une lumière visible de couleur différente et dans lequel une sous-zone de détection unique (A ; B) est déterminée à partir d'une couleur de lumière attribuée à une sous-zone de détection respective (A ; B).

8. Dispositif de test de génération de rayonnement infrarouge (40 ; 46) agencé pour tester un capteur de détection de mouvement infrarouge passif (1), ledit capteur (1) ayant un détecteur de rayonnement infrarouge (9) et une fenêtre de détection (4) formée par une partie de formation de faisceau (6) définissant une plage de détection ou un champ de vision de détection (8), ladite partie de formation de faisceau (6) étant agencée pour diriger un rayonnement infrarouge dans ledit champ de vision (8) au niveau dudit détecteur de rayonnement infrarouge (9), ledit champ de vision (8) étant constituée d'une pluralité de zones de détection spatialement adjacentes (10-17) et chaque zone de détection étant constituée de première (A) et deuxième (B) sous-zones de détection adjacentes, ledit dispositif de test (40 ; 46) ayant un boîtier (41) comprenant un générateur de rayonnement infrarouge (42) agencé pour générer un rayonnement infrarouge afin d'exciter ledit capteur (1), et une unité de commande (53) agencée pour activer un orifice pouvant être fermé (43) dudit dispositif de test (40 ; 46), **caractérisé en ce que** ledit générateur de rayonnement infrarouge (42) est une surface de rayonnement infrarouge thermique en forme de plaque ou de disque à alimentation électrique (50) dimensionnée de sorte qu'un rayonnement infrarouge soit généré dans une sous-zone de détection unique, et ledit dispositif de test (40 ; 46) comprend ledit orifice pouvant être fermé (43) pour l'émission externe d'un rayonnement infrarouge généré par ledit générateur de rayonnement infrarouge (42), où ladite unité de commande (53) est agencée pour commander l'émission d'un rayonnement infrarouge par ledit dispositif de test (53) en ouvrant et fermant ledit orifice (43) pour émettre un profil de rayonnement (25) fournissant une quantité d'énergie infrarouge créant un signal différentiel entre ladite sous-zone de détection unique et sa sous-zone de détection adjacente pour déclencher une réponse par ledit capteur (1).

9. Dispositif de test selon la revendication 8, dans lequel ladite surface de rayonnement en forme de plaque ou de disque à alimentation électrique a des dimensions dans une plage allant de 8 x 8 cm à 12 x 12 cm pour déclencher une réponse par ledit capteur (1) à une distance allant de 2 m à 20 m du capteur (1).

10. Dispositif de test selon la revendication 8 ou 9, dans lequel ladite unité de commande (53) est agencée pour commander l'ouverture et la fermeture dudit orifice (43) pour générer un profil de rayonnement de type à impulsions (25), ayant un front montant ou avant (26), un front descendant ou arrière (27) et une largeur d'impulsion (28) prédéterminés.

11. Dispositif de test selon la revendication 8, 9 ou 10, dans lequel ladite unité de commande (53) est agencée pour ouvrir partiellement ledit orifice (43), pour commander une largeur de faisceau dudit rayonnement infrarouge émis, où en particulier ledit orifice (43) peut être ouvert et fermé par une pluralité de volets allongés parallèles (44), où ladite unité de commande (53) est agencée pour activer un angle d'ouverture desdits volets (44) afin de commander ladite largeur de faisceau.

12. Dispositif de test selon la revendication 8, 9, 10 ou 11, comprenant en outre un capteur de température (56) pour mesurer la température ambiante, où ladite unité de commande (53) est agencée pour alimenter ladite source de rayonnement infrarouge thermique (50) à une température différente d'une valeur définie supérieure à la température ambiante, dans une plage de température.

13. Dispositif de test selon la revendication 8, 9, 10, 11 ou 12, comprenant au moins l'un d'une pluralité de générateurs de rayonnement infrarouge en forme de plaque ou de disque (42) et d'une pluralité d'orifices pouvant être fermés (43 ; 47, 48) agencés pour émettre un rayonnement infrarouge dans une pluralité de faisceaux de rayonnement agencés spatialement, pour rayonner simultanément ou indépendamment un rayonnement infrarouge dans un faisceau de rayonnement adapté à une sous-zone de détection unique (A ; B) d'un capteur (1) à tester.

14. Système de surveillance (60), comprenant au moins un capteur de détection de mouvement infrarouge passif (1) relié de manière fonctionnelle à une unité de commande (58) dudit système de surveillance (60) pour surveiller une réponse par ledit au moins un capteur (1), et au moins un dispositif de test (40 ; 46) selon l'une des revendications 8 à 13, relié de manière fonctionnelle à ladite unité de commande (58), et agencé pour tester ledit au moins un capteur (1) selon un procédé de l'une des revendications 1 à 7.
